# FASCICULE DE BREVET EUROPEEN

(11) **EP 3 385 058 B1**
(45) Date de publication et mention de la délivrance du brevet: **25.12.2019**
(21) Numéro de dépôt: 18162394.3
(22) Date de dépôt: 16.03.2018
(51) Int. Cl.: B29C 65/06, B60Q 1/00, B29L 31/00

(54) **BOÎTIER DE BLOC OPTIQUE À PATTES DE COUPLAGE À PROTUBÉRANCES, POUR LE COUPLAGE ÉTROIT À UN OUTIL DE VIBRATION**
GEHÄUSE FÜR OPTISCHEN BLOCK MIT VORSTEHENDEN KOPPLUNGSELEMENTEN FÜR EINE ENGE KOPPLUNG AN EIN SCHWINGUNGSWERKZEUG
OPTICAL BLOCK HOUSING WITH COUPLING LEGS WITH PROTRUSIONS, FOR CLOSE COUPLING TO A VIBRATION TOOL

(30) Priorité: 05.04.2017 FR 1752943
(43) Date de publication de la demande: 10.10.2018
(73) Titulaire: PSA Automobiles SA, 78300 Poissy (FR)
(72) Inventeur: PERON, Rodolphe, 95220 Herblay (FR)

(56) Documents cités:
- WO-A2-2010/128757
- JP-A- H09 259 607
- JP-A- 2007 160 886
- JP-A- 2009 039 988
- US-A- 6 033 505
- US-A1- 2007 084 539

## Description

L'invention concerne les blocs optiques qui équipent certains véhicules, et plus précisément les boîtiers qui font partie de tels blocs optiques et qui sont destinés à être solidarisés à des glaces de protection.

Dans ce qui suit, on entend par « bloc optique » un dispositif d'éclairage comprenant un boîtier délimitant un espace fermé par une glace de protection et comprenant des moyens techniques propres à assurer au moins une fonction photométrique d'éclairage, de signalisation ou d'effet lumineux, éventuellement décoratif.

Comme le sait l'homme de l'art, certains blocs optiques définis ci-dessus, comprennent un boîtier ayant un bord périphérique avant (opposé à une face arrière) qui est solidarisé fixement à un bord périphérique arrière d'une glace de protection lors d'une phase de solidarisation par vibrations. Cette solidarisation est réalisée au moyen d'un outil de vibration auquel est couplée temporairement la face arrière du boîtier par le biais de pièces dédiées.

Afin de permettre ce couplage, la face arrière du boîtier comprend au moins deux pattes de couplage en saillie qui sont couplées à des pièces correspondantes de l'outil. Une fois le couplage réalisé, l'outil fait vibrer le boîtier afin que son bord périphérique avant se solidarise par soudage au bord périphérique arrière de la glace de protection. Ce soudage résulte de la fonte, par frottements induits par les vibrations, de dents de soudure qui sont initialement présentes sur le bord périphérique arrière de la glace de protection.

Actuellement, les pattes de couplage sont des nervures plates et lisses. Or, de telles nervures ne garantissent pas un positionnement optimal du boitier par rapport à l'outil et donc par rapport à la glace de protection, du fait des tolérances dimensionnelles de fabrication. Par conséquent, on est contraint de modifier le moule du boîtier dans les zones de définition des pattes de couplage par essais successifs lors d'une phase de mise au point. Cela s'avère fastidieux et complexe. En outre, cela peut parfois nécessiter la fabrication de plusieurs moules successifs.

On connait également des documents US6033505A, JP2007160886A et WO2010/128757A, des boitiers comportant des pattes de couplage en saillie présentant différents profils. Toutefois ces pattes de couplage ne permettent pas de minimiser les jeux de positionnement du boîtier dans l'outil de vibration, et donc garantir une position optimale de ce boîtier par rapport à la glace lors de la phase de vibration.

L'invention a donc notamment pour but d'améliorer la situation.

Elle propose notamment à cet effet un boîtier, propre à faire partie d'un bloc optique d'un véhicule, et comprenant un bord périphérique avant opposé à une face arrière munie d'au moins deux pattes de couplage en saillie tel que décrit notamment dans les documents US6033505A, JP2007160886A et WO2010/128757A.

Le boitier selon la présente invention se caractérise par la partie caractérisante de la revendication 1. Selon l'invention, la partie principale de chaque patte de couplage est prolongée sur au moins une face latérale par au moins deux protubérances latérales, et la partie principale d'au moins l'une des pattes de couplage est prolongée sur deux faces latérales opposées par au moins une protubérance latérale.

Ainsi, on peut avantageusement minimiser les jeux de positionnement du boîtier dans l'outil de vibration, et donc garantir une position optimale de ce boîtier par rapport à la glace lors de la phase de vibration.

Le boîtier selon l'invention peut comporter d'autres caractéristiques qui peuvent être prises séparément ou en combinaison, et notamment :
- dans un mode de réalisation, la partie principale d'au moins l'une des pattes de couplage peut être prolongée sur deux faces latérales opposées par au moins deux protubérances latérales ;
- au moins une des pattes de couplage peut être orientée suivant une direction longitudinale de la face arrière et au moins une autre des pattes de couplage peut être orientée suivant une autre direction de la face arrière qui est perpendiculaire à cette direction longitudinale ;
   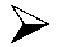 il peut comprendre deux pattes de couplage orientées suivant la direction longitudinale et deux autres pattes de couplage orientées suivant l'autre direction perpendiculaire à cette direction longitudinale ;
- au moins l'une des protubérances latérales peut présenter une forme générale de prisme à base triangulaire ;
   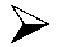 le prisme peut présenter une hauteur croissante d'une extrémité à une autre extrémité opposée.

L'invention propose également un outil de vibration comprenant au moins deux pièces comprenant chacune un logement interne présentant une forme femelle homologue d'une forme mâle d'une patte de couplage correspondante définie en saillie sur une face arrière d'un boîtier du type de celui présenté ci-avant, afin de loger cette patte de couplage correspondante pour solidariser fixement un bord périphérique avant de ce boîtier à un bord périphérique arrière d'une glace de protection lors d'une phase de solidarisation par vibrations.

D'autres caractéristiques et avantages de l'invention apparaîtront à l'examen de la description détaillée ci-après, et des dessins annexés, sur lesquels :
- la figure 1 illustre schématiquement, dans une vue de face (YZ), un exemple de réalisation d'un boîtier de bloc optique selon l'invention,
- la figure 2 illustre schématiquement, dans une vue en perspective, un exemple de réalisation d'une pièce d'outil selon l'invention destinée à être couplée à la deuxième patte de couplage du boîtier de la figure 1,
- la figure 3 illustre schématiquement, dans une vue en perspective, la première patte de couplage du boîtier de la figure 1, et
- la figure 4 illustre schématiquement, dans une vue en perspective, le boîtier de la figure 1 une fois ses quatre pattes de couplage couplées à quatre pièces d'un outil de vibration.

L'invention a notamment pour but de proposer un boîtier BB de bloc optique BO de véhicule destiné à être couplé temporairement à des pièces POj d'un outil de vibration afin d'être solidarisé fixement à une glace de protection.

On considère dans ce qui suit, à titre d'exemple non limitatif, que le bloc optique BO est destiné à équiper un véhicule de type automobile, comme par exemple une voiture. Mais l'invention n'est pas limitée à cette application. En effet, le bloc optique BO peut faire partie de n'importe quel véhicule (terrestre, maritime (ou fluvial), ou aérien).

Par ailleurs, on considère dans ce qui suit, à titre d'exemple non limitatif, que le bloc optique BO est un feu arrière. Mais il pourrait également s'agir d'un projecteur avant (ou phare).

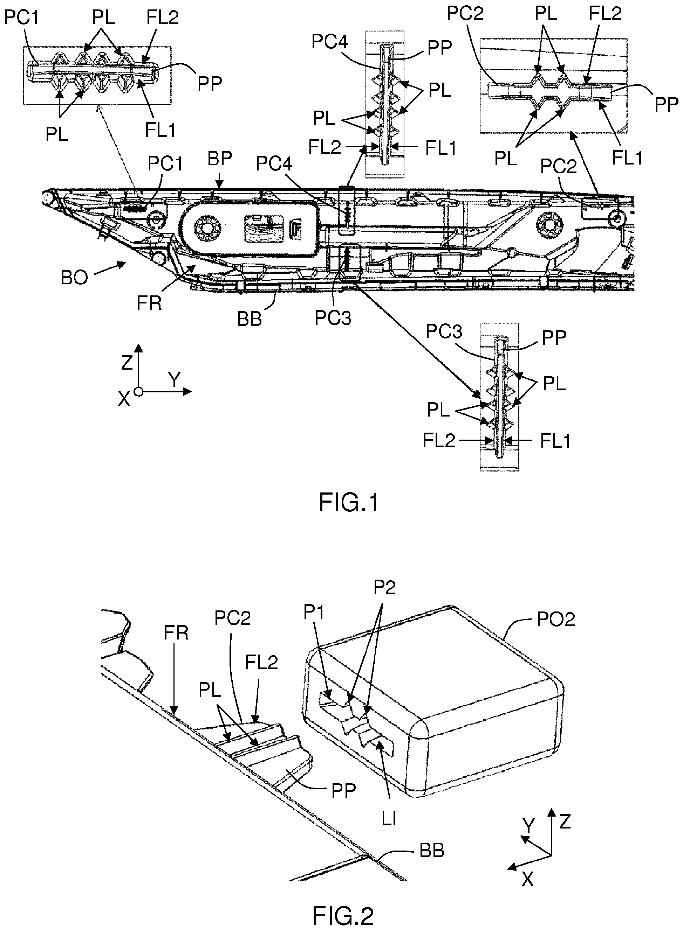

Sur les figures 1 à 4, la direction X est une direction dite longitudinale du fait qu'elle est destinée à être parallèle à un côté longitudinal d'un véhicule, la direction Y est une direction dite transversale du fait qu'elle est destinée à être perpendiculaire aux côtés longitudinaux de ce véhicule et donc perpendiculaire à la direction longitudinale X, et la direction Z est une direction verticale, perpendiculaire aux directions longitudinale X et transversale Y.

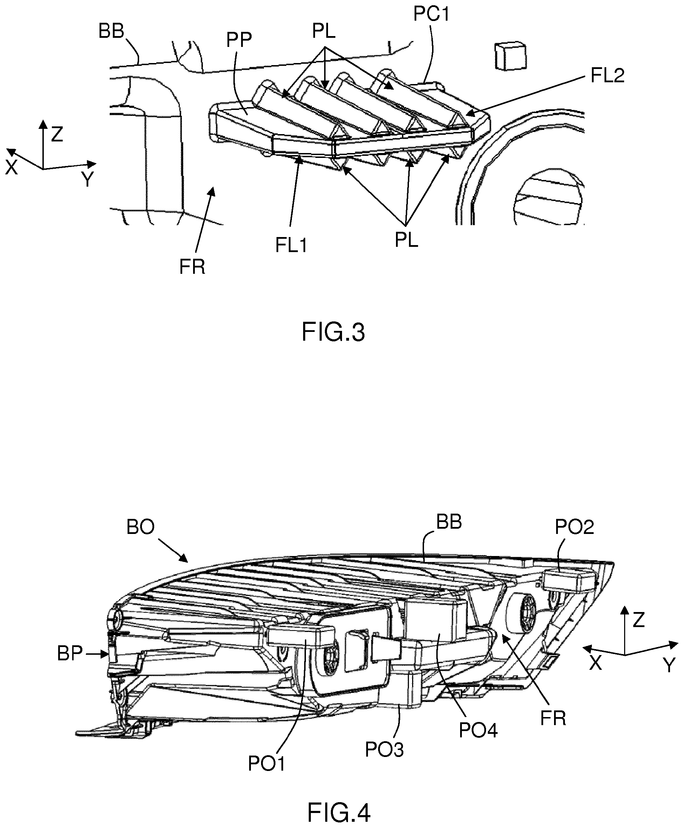

On a schématiquement illustré sur les figures 1 et 4, une partie d'un boîtier BB d'un bloc optique BO de véhicule (ici un feu arrière).

Un tel bloc optique BO est destiné, ici, à être solidarisé à une partie de la carrosserie d'un véhicule (ici dans une partie arrière).

Bien que cela n'apparaisse pas sur les figures 1 et 4, ce boîtier BB délimite une cavité destinée à être fermée par une glace de protection et logeant des moyens techniques propres à assurer au moins une fonction photométrique d'éclairage, de signalisation ou d'effet lumineux, éventuellement décoratif. Un tel boîtier BB est de préférence réalisé dans un matériau rigide, comme par exemple une matière plastique ou synthétique. Dans ce cas, il peut être réalisé par moulage.

Ce boîtier BB comprend un bord périphérique avant BP opposé à une face arrière FR qui est munie d'au moins deux pattes de couplage PCj en saillie.

Comme illustré sur les figures 1 à 3, chaque patte de couplage PCj comprend une partie principale PP longiligne et prolongée sur au moins une face latérale FLk (k = 1 ou 2) par au moins une protubérance latérale PL. Ainsi, chaque partie principale PP et chaque protubérance latérale PL associée définissent ensemble une forme mâle qui est propre à être logée dans un logement interne LI (voir figure 2) qui présente une forme femelle homologue de cette forme mâle et qui est défini dans une pièce POj correspondante d'un outil de vibration.

Comme illustré sur la figure 2, la forme femelle du logement interne LI d'une pièce POj comprend une première partie P1, qui est homologue de la partie principale PP de la forme mâle de la patte de couplage PCj correspondante, et au moins une seconde partie P2, qui est homologue de la protubérance latérale PL de cette forme mâle de la patte de couplage PCj correspondante. La forme femelle du logement interne LI d'une pièce POj constitue donc une contre forme d'une patte de couplage PCj correspondante.

L'outil de vibration est destiné, une fois que le boîtier BB a été étroitement couplé à ses pièces POj (dont le nombre est égal au nombre de pattes de couplage PCj du boîtier BB), à faire vibrer ce dernier (BB) afin de solidariser fixement son bord périphérique avant BP à un bord périphérique arrière d'une glace de protection lors d'une phase de solidarisation par vibrations. Il est rappelé que les vibrations sont destinées à solidariser par soudage le bord périphérique avant BP du boîtier BB au bord périphérique arrière de la glace de protection. A cet effet, la glace de protection est de préférence réalisée par moulage d'une matière plastique et comprend sur son bord périphérique arrière des dents de soudure qui fondent du fait des frottements induits par les vibrations.

L'outil de vibration comprend une partie fixe et une partie mobile. La glace de protection à souder par vibration est par exemple solidarisée fixement et temporairement à la partie fixe à laquelle sont solidarisés les pièces POj. Le boîtier BB est par exemple solidarisé fixement et temporairement par ses pattes de couplage PCj aux pièces POj de la partie mobile. La pièce mobile est par exemple placée au-dessus de la pièce fixe de sorte que le bord périphérique BP du boîtier BB soit placé en regard de la glace de protection et au-dessus des dents de soudure de cette dernière. Sous l'effet de la friction entre les dents de soudure de la glace de protection et le boîtier BB, induit par le déplacement relatif dans un plan de la partie mobile par rapport à la partie fixe, les dents de soudure fondent et collent la glace de protection au bord périphérique BP du boîtier BB.

Grâce aux pattes de couplage PCj plus complexes que celles de l'art antérieur, on peut avantageusement minimiser les jeux de positionnement du boîtier BB dans l'outil (et donc par rapport à ses pièces POj), et ainsi garantir une position optimale de ce boîtier BB par rapport à la glace de protection lors de la phase de solidarisation par vibration.

Les pattes de couplage PCj peuvent présenter de nombreux agencements et donc définir de nombreuses formes mâles.

Ainsi, la partie principale PP d'au moins l'une des pattes de couplage PCj peut être prolongée sur au moins une face latérale FLk par au moins deux protubérances latérales PL.

Dans une variante de réalisation, la partie principale PP d'au moins l'une des pattes de couplage PCj peut être prolongée sur deux faces latérales FL1 et FL2 opposées par au moins une protubérance latérale PL.

Dans une autre variante de réalisation, la partie principale PP d'au moins l'une des pattes de couplage PCj peut être prolongée sur deux faces latérales FL1 et FL2 opposées par au moins deux protubérances latérales PL.

On notera que dans l'exemple illustré non limitativement sur la figure 1 la face arrière FR du boîtier BB est munie de quatre pattes de couplage PCj (j = 1 à 4). Ces quatre pattes de couplage PCj sont destinées à être temporairement couplées à quatre pièces POj correspondantes de l'outil de vibration, comme illustré sur la figure 4. Mais la face arrière FR du boîtier BB pourrait comporter n'importe quel nombre de pattes de couplage PCj, dès lors que ce nombre est supérieur ou égal à deux.

Dans cet exemple, les première PC1, troisième PC3 et quatrième PC4 pattes de couplage comprennent chacune quatre protubérances latérales PL identiques et parallèles entre elles sur la première face latérale FL1 (k = 1) et quatre protubérances latérales PL identiques et parallèles entre elles sur la seconde face latérale FL2 (k = 2). La deuxième patte de couplage PC2 comprend deux protubérances latérales PL identiques et parallèles entre elles sur sa première face latérale FL1 et deux protubérances latérales PL identiques et parallèles entre elles sur sa seconde face latérale FL2.

On notera que le nombre de protubérances latérales PL sur la première face latérale FL1 peut être différent du nombre de protubérances latérales PL sur la seconde face latérale FL2 associée. Par ailleurs, les protubérances latérales PL d'une face latérale FLk peuvent être différentes les unes des autres, et les protubérances latérales PL de la première face latérale FL1 peuvent être différentes des protubérances latérales PL de la seconde face latérale FL2 associée.

On notera également qu'il est avantageux qu'au moins l'une des protubérances latérales PL présente une forme générale de prisme à base triangulaire. En effet, cela facilite l'introduction de chaque patte de couplage PCj dans le logement interne LI de la pièce POj correspondante, puis une fois l'introduction terminée cela permet de limiter les déplacements suivant la direction de la grande longueur de la partie principale PP du fait des pentes des prismes PL.

On notera également qu'il est avantageux, comme illustré, que chaque prisme PL présente une hauteur croissante d'une extrémité à une autre extrémité opposée. De préférence, et comme illustré, la plus grande hauteur est située au niveau de la face arrière FR, et la plus petite hauteur est située du côté qui est destiné à être introduit en premier dans le logement LI. Cela permet de faciliter encore plus l'introduction de chaque patte de couplage PCj dans le logement interne LI de la pièce POj correspondante, puis une fois l'introduction terminée cela permet d'empêcher le glissement de la patte de couplage PCj dans la forme femelle homologue (ou contre forme) du logement interne LI de la pièce POj correspondante.

On notera également que dans l'exemple illustré non limitativement sur les figures 1 à 3 toutes les protubérances latérales PL sont identiques et présentent chacune une forme générale de prisme à base triangulaire. Plus précisément, chaque prisme PL présente une hauteur croissante d'une extrémité à une autre extrémité opposée.

On notera également, comme illustré non limitativement sur la figure 1, qu'au moins une des pattes de couplage PCj peut être orientée suivant une direction longitudinale de la face arrière FR et au moins une autre des pattes de couplage PCj peut être orientée suivant une autre direction de la face arrière FR perpendiculaire à cette direction longitudinale de la face arrière FR. Il est important de noter que la direction longitudinale de la face arrière FR est ici la direction transversale Y du véhicule, et que l'autre direction de la face arrière FR est ici la direction verticale Z. L'orientation d'une patte de couplage PCj suivant la direction longitudinale de la face arrière FR permet de garantir le positionnement du boîtier BB suivant la direction transversale Y et limite les jeux entre le boîtier BB et la pièce POj correspondante. De même, l'orientation d'une patte de couplage PCj suivant l'autre direction de la face arrière FR, perpendiculaire à la direction longitudinale de la face arrière FR, permet de garantir le positionnement du boîtier BB suivant la direction verticale Z et limite les jeux entre le boîtier BB et la pièce POj correspondante.

Dans l'exemple illustré non limitativement sur les figures 1 et 3, la face arrière FR comprend deux pattes de couplage PC1 et PC2 orientées suivant la direction longitudinale (ici Y) et deux autres pattes de couplage PC3 et PC4 orientées suivant l'autre direction (ici Z) perpendiculaire à la direction longitudinale (ici Y). On notera que le nombre de pattes de couplage PCj peut varier selon les dimensions du boîtier BB. Ainsi, ce dernier (BB) pourrait ne comporter que deux ou trois pattes de couplage PCj.

L'invention offre plusieurs avantages, parmi lesquels :
- un positionnement et un maintien parfaits du boîtier dans l'outil de vibration et donc une optimisation de la phase de solidarisation par vibration induisant le soudage de la glace de protection,
- elle facilite l'introduction de chaque patte de couplage dans le logement interne de la pièce correspondante de l'outil de vibration,
- elle permet de réduire notablement la phase de mise au point du moule du boîtier.

## Revendications

1. Boîtier (BB), propre à faire partie d'un bloc optique (BO) d'un véhicule, et comprenant un bord périphérique avant (BP) opposé à une face arrière (FR) munie d'au moins deux pattes de couplage (PCj) en saillie, chaque patte de couplage (PCj) comprenant une partie principale (PP) longiligne et prolongée sur au moins une face latérale (FLk) par au moins deux protubérances latérales (PL) afin de définir une forme mâle propre à être logée dans un logement interne (LI) présentant une forme femelle homologue de ladite forme mâle et défini dans une pièce (POj) correspondante d'un outil destiné à faire vibrer ledit boîtier (BB) pour solidariser fixement son bord périphérique avant (BP) à un bord périphérique arrière d'une glace de protection lors d'une phase de solidarisation par vibrations, **caractérisé en ce que** ladite partie principale (PP) d'au moins l'une desdites pattes de couplage (PCj) est prolongée sur deux faces latérales (FLk) opposées par au moins une protubérance latérale (PL).

2. Boîtier selon la revendication 1, **caractérisé en ce que** ladite partie principale (PP) d'au moins l'une desdites pattes de couplage (PCj) est prolongée sur deux faces latérales (FLk) opposées par deux protubérances latérales (PL).

3. Boîtier selon l'une des revendications 1 à 2, **caractérisé en ce qu'**au moins une desdites pattes de couplage (PCj) est orientée suivant une direction longitudinale de ladite face arrière (FR) et au moins une autre desdites pattes de couplage (PCj) est orientée suivant une autre direction de ladite face arrière (FR) perpendiculaire à ladite direction longitudinale.

4. Boîtier selon la revendication 3, **caractérisé en ce qu'**il comprend deux pattes de couplage (PC1, PC2) orientées suivant ladite direction longitudinale et deux autres pattes de couplage (PC3, PC4) orientées suivant ladite autre direction perpendiculaire à ladite direction longitudinale.

5. Boîtier selon l'une des revendications 1 à 4, **caractérisé en ce qu'**au moins l'une desdites protubérances latérales (PL) présente une forme générale de prisme à base triangulaire.

6. Boîtier selon la revendication 5, **caractérisé en ce que** ledit prisme présente une hauteur croissante d'une extrémité à une autre extrémité opposée.

7. Outil de vibration comprenant au moins deux pièces (POj), **caractérisé en ce que** chaque pièce (POj) comprend un logement interne (LI) présentant une forme femelle homologue d'une forme mâle d'une patte de couplage (PCj) correspondante définie en saillie sur une face arrière (FR) d'un boîtier (BB) selon l'une des revendications précédentes, afin de loger cette patte de couplage (PCj) correspondante pour solidariser fixement un bord périphérique avant (BP) dudit boîtier (BB) à un bord périphérique arrière d'une glace de protection lors d'une phase de solidarisation par vibrations.

## Patentansprüche

1. Gehäuse (BB), das geeignet ist, Teil eines optischen Blocks (BO) eines Fahrzeugs zu sein, und das einen vorderen Umfangsrand (BP) umfasst, der einer Rückseitenfläche (FR) entgegengesetzt ist, die mit mindestens zwei vorragenden Kopplungspratzen (PCj) versehen ist, wobei jede Kopplungspratze (PCj) einen länglichen Hauptteil (PP) umfasst, und der sich auf mindestens einer Seitenfläche (FLk) durch mindestens zwei seitliche Ausstülpungen (PL) verlängert, um eine Steckform zu bilden, die geeignet ist, in einer Innenaufnahme (LI) aufgenommen zu sein, die eine Buchsenform homolog zu der Steckform aufweist und in einem entsprechenden Teil (POj) eines Werkzeugs definiert ist, das dazu bestimmt ist, das Gehäuse (BB) schwingen zu lassen, um seinen vorderen Umfangsrand (BP) fest mit einem hinteren Umfangsrand eines Schutzspiegelglases bei einer Phase des festen Verbindens durch Schwingungen zu verbinden, **dadurch gekennzeichnet, dass** der Hauptteil (PP) mindestens einer der Kopplungspratzen (PCj) auf zwei entgegengesetzten Seitenflächen (FLk) durch mindestens eine seitliche Ausstülpung (PL) verlängert ist.

2. Gehäuse nach Anspruch 1, **dadurch gekennzeichnet, dass** der Hauptteil (PP) mindestens einer der Kopplungspratzen (PCj) auf zwei entgegengesetzten Seitenflächen (FLk) durch zwei seitliche Ausstülpungen (PL) verlängert ist.

3. Gehäuse nach einem der Ansprüche 1 bis 2, **dadurch gekennzeichnet, dass** mindestens eine der Kopplungspratzen (PCj) entlang einer Längsrichtung der Rückseitenfläche (FR) ausgerichtet ist, und mindestens eine andere der Kopplungspratzen (PCj) entlang einer anderen Richtung der Rückseitenfläche (FR) senkrecht zu der Längsrichtung ausgerichtet ist.

4. Gehäuse nach Anspruch 3, **dadurch gekennzeichnet, dass** es zwei Kopplungspratzen (PC1, PC2) umfasst, die entlang der Längsrichtung ausgerichtet sind, und zwei andere Kopplungspratzen (PC3, PC4), die entlang der anderen Richtung senkrecht zu der Längsrichtung ausgerichtet sind.

5. Gehäuse nach einem der Ansprüche 1 bis 4, **dadurch gekennzeichnet, dass** mindestens eine der seitlichen Ausstülpungen (PL) eine allgemeine Prismenform mit Dreieckbasis aufweist.

6. Gehäuse nach Anspruch 5, **dadurch gekennzeichnet, dass** das Prisma eine Höhe aufweist, die von einem Ende zu einem anderen entgegengesetzten Ende zunimmt.

7. Schwingungswerkzeug, das mindestens zwei Teile (POj) umfasst, **dadurch gekennzeichnet, dass** jedes Teil (POj) eine innere Aufnahme (LI) umfasst, die eine Buchsenform homolog zu einer Steckform einer entsprechenden Kopplungspratze (PCj) aufweist, die auf einer Rückseitenfläche (FR) eines Gehäuses (BB) nach einem der vorstehenden Ansprüche vorragend definiert ist, um diese entsprechende Kopplungspratze (PCj) aufzunehmen, um einen vorderen Umfangsrand (BP) des Gehäuses (BB) an einem hinteren Umfangsrand eines Schutzspiegelglases bei einer Phase des Verbindens durch Schwingungen fest zu verbinden.

## Claims

1. A housing (BB), suitable to form part of an optical block (BO) of a vehicle, and including a peripheral front edge (BP) opposite a rear face (FR), provided with at least two projecting coupling legs (PCj), each coupling leg (PCj) including a main portion (PP) which is elongated and extended over at least a lateral face (FLk) by at least two lateral protrusions (PL) so as to define a male shape suitable to be housed in an internal housing (LI) having a female shape homologous to said male shape and defined in a corresponding part (POj) of a tool intended to cause said housing (BB) to vibrate so as to fixedly secure its front peripheral edge (BP) to a rear peripheral edge of a protective glass during a phase of securing by vibrations, **characterized in that** said main portion (PP) of at least one of said coupling legs (PCj) is extended on two opposite lateral faces (FLk) by at least one lateral protrusion (PL).

2. The housing according to Claim 1, **characterized in that** said main portion (PP) of at least one of said coupling legs (PCj) is extended on two opposite lateral faces (FLk) by two lateral protrusions (PL).

3. The housing according to one of Claims 1 to 2, **characterized in that** at least one of said coupling legs (PCj) is oriented along a longitudinal direction of said rear face (FR) and at least one other of said coupling legs (PCj) is oriented along another direction of said rear face (FR) perpendicular to said longitudinal direction.

4. The housing according to Claim 3, **characterized in that** it includes two coupling legs (PC1, PC2) oriented along said longitudinal direction and two other coupling legs (PC3, PC4) oriented along said other direction perpendicular to said longitudinal direction.

5. The housing according to one of Claims 1 to 4, **characterized in that** at least one of said lateral protrusions (PL) has a general shape of a triangular-based prism.

6. The housing according to Claim 5, **characterized in that** said prism has a height increasing from one end to another opposite end.

7. A vibration tool including at least two parts (POj), **characterized in that** each part (POj) includes an internal housing (LI) having a female shape homologous with a male shape of a defined corresponding coupling leg (PCj) projecting on a rear face (FR) of a housing (BB) according to one of the preceding claims, so as to house this corresponding coupling leg (PCj) for fixedly securing a front peripheral edge (BP) of said housing (BB) to a rear peripheral edge of a protection glass during a phase of securing by vibrations.
